# EUROPEAN PATENT APPLICATION

(11) **EP 0 940 630 A2**
(43) Date of publication of application: **08.09.1999**
(21) Application number: 99810095.2
(22) Date of filing: 04.02.1999
(51) Int. Cl.: F21V 19/00, G01J 3/10

(54) **Quick change lamp block system**

(30) Priority: 09.02.1998 US 74030
(71) Applicant: UMM Electronics, Inc., Indianapolis, Indiana 46250 (US)
(72) Inventor: Celentano, Mike, Indianapolis, Indiana 46228 (US); Watkins, Clayton, Indianapolis, Indiana 46228 (US)
(74) Representative: Ganguillet, Cyril

(57) **Abstract**

A bulb support (2) for mounting in a lamp block system (12,48) of a spectophotometer, has means for securing the bulb support (2) to the lamp block system (12,48); a bulb supporting structure (10) positioned on the bulb support (2), at one side of the bulb support relative to the securing means; and a rotation manipulative portion (4) on the bulb support (2), at a side of the bulb support opposite the bulb support structure (10) relative to the securing means. When the bulb support (2) is mounted in the lamp block system (12,48), the bulb support structure (10) is inside the lamp block system and the manipulative portion (4) is outside the lamp block system. The bulb support allows for the bulb to be changed quickly, and without tools.

## Description

### BACKGROUND OF THE INVENTION

### Field of the Invention

The present invention relates to a lamp block system for a spectrophotometer which allows the lamp to be quickly changed without tools.

### Description of the Background

Spectrophotometers may be used to measure the color spectrum on the surface of objects, such as paper, paint chips or fabric swatches. A spectrophotometer for reflectance spectrometry usually include a light source, such as a light bulb (or lamp) and a power source, optics for transferring the light from the light source to the sample, such as fiber optics, lenses and/or mirrors, and optics for collecting the light, which may also include fiber optics, lenses and/or mirrors. The collected light is then transferred to a device for separating the light into its component wavelengths, such as a diffraction grading or a prism, and then to a detector to measure the intensity of one or more of the different wavelengths of the light. As a reference, the intensity of light generated by the light source may also be transferred by optics to a detector. The signal generated by the detector from the sample light, and the signal generated by the detector from the reference light, may be transferred through a data processing system, such as a computer, and the result displayed or stored. A large variety of configurations and methods are known, and are described in U.S. Patent Nos. 5,701,175; 5,400,138; 5,319,437; 4,773,761; 3,885,878; and 3,806,256; all of which are incorporated by reference.

Typically, the light bulb of a spectrophotometer is inside a lamp block system. The lamp block system holds the bulb securely in a position to maintain proper electrical connections and allow the light from the bulb to be transferred by the optical system to the sample, and/or directly to a detector as a reference. The lamp block system is mounted inside a housing which includes a cover. Access to the bulb is difficult, and requires removing the cover and disassembling the lamp block system. Changing the lamp requires a variety of tools, and a substantial amount of time, approximately 10 to 20 minutes. In addition, touching the transparent portion of the bulb can generate hot spots and cause premature failure, and therefore insertion of the bulb and reassembly of the lamp block system can be a delicate operation. It would be desirable, therefore, to have a lamp block system which would allow a user to quickly change the lamp without tools.

### SUMMARY OF THE INVENTION

Accordingly, one object of the invention is to provide a novel lamp block system which allows for quickly changing the lamp without tools.

Another object of the invention is to provide a novel spectrophotometer which includes this lamp block system.

Another object of the invention is to provide a novel bulb support which can be quickly removed from a lamp block assembly.

Another object of the invention is to provide a method for quickly changing a lamp without tools.

These objects may be achieved with a bulb support for mounting in a lamp block system, comprising: means for securing the bulb support to the lamp block system; a bulb supporting structure positioned on the bulb support at one side of the bulb support relative to the securing means; and a rotation manipulative portion on the bulb support at a side of the bulb support opposite the bulb support structure relative to the securing means, wherein when the bulb support is mounted to the lamp block system, via the securing means, the bulb support structure is inside the lamp block system and the manipulative portion is outside the lamp block system.

These objects may also be achieved with a lamp block system comprising the novel bulb support and a lamp block. These objects may also be achieved by a spectrophotometer comprising the novel bulb support. Furthermore, these objects may also be achieved by a method of changing a lamp, comprising: rotating the rotation manipulative portion of the novel bulb support thereby disengaging the securing means, removing the bulb support and replacing the bulb in the bulb support.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein:

Figure 1 illustrates a bulb support of the present invention assembled with a contact washer and a bulb.

Figure 2 illustrates a bulb support, a contact washer and a bulb, disassembled.

Figure 3 illustrates a lamp block system mounted to a portion of a spectrophotometer housing.

Figure 4 illustrates a lamp PCB (printed circuit board).

Figure 5 illustrates a lamp block disassembled.

Figures 6 and 7 provide two views of part 1 and part 2 of a lamp block.

Figure 8 is a photograph of a portion of a spectrophotometer with the cover removed, showing the lamp block system and the housing of the spectrophotometer with the bulb support secured in the lamp block system.

Figure 9 is a photograph of a spectrophotometer illustrating a lamp block system with the bulb support, contact washer and bulb disengaged from the lamp block system.

Figures 10-14 illustrate the details of a preferred embodiment of the present invention.

### DESCRIPTION OF THE PRESENT INVENTION

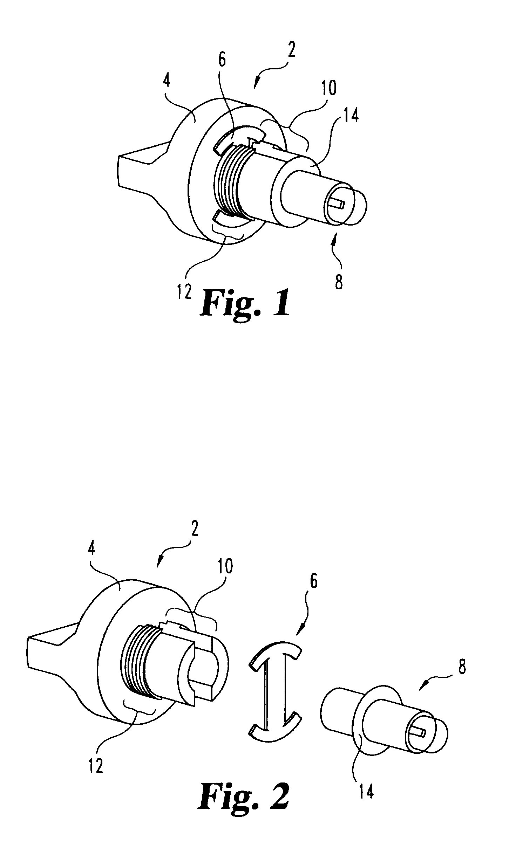

Figure 2 illustrates a bulb support 2, a contact washer 6 and a bulb or lamp 8. The bulb support has a rotation manipulative portion (knob) 4, a bulb supporting structure 10, and means for securing the bulb support to a lamp block system (threadings) 12. With this embodiment of a bulb support, a contact washer is necessary to make electrical contact with the bottom of the bulb; however, the bulb support may be made so that it can provide the electrical contact, such as by incorporating the washer into the bulb support. The bulb or lamp, having a flange 14, is of a standard and readily available type, for example a krypton star lamp (available from CARLEY LAMPS, Part No. KS4R1.7), or medical based bulbs. Figure 1 has the same parts as illustrated in Figure 2, except assembled together.

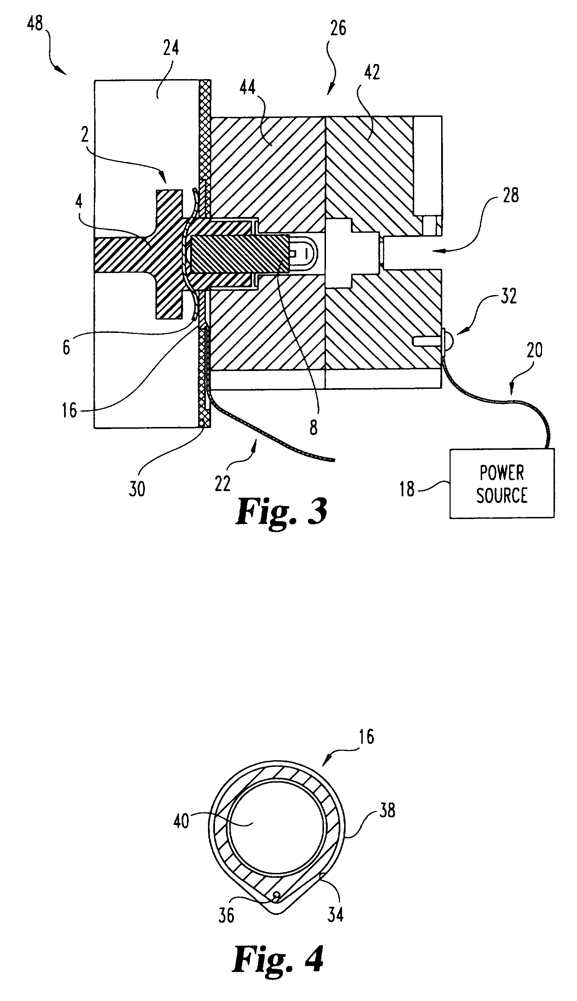

Figure 3 shows a lamp block system 48, which includes a bulb support 2 with a lamp 8 and a contact washer 6, a lamp block 26, a heat sink 24 and a lamp PCB 16. A lead 20 is connected to the lamp block by a fastener 32, and forms part of the electrical system for providing power to the lamp. Preferably, lead 20 is connected to ground. Also illustrated is lead 22 which is connected to the lamp PCB, and also forms part of the electrical system for providing power to the lamp, lead 22 preferably being connected to the power source 18. The lamp block is composed of two parts, part one 44 and part two 42. When assembled, the lamp block has a light path 28 which may receive fiber optics (not illustrated) which forms part of the optical system for transferring the light from the lamp to the sample. The lamp block system is attached to a portion of the housing 30 of a spectrophotometer. As illustrated, the rotation manipulative portion (knob) of the bulb support is on the outside of the housing, while the bulb is inside the lamp block.

The lamp PCB is illustrated in Figure 4. The structure is referred to as a PCB (printed circuit board) because it is most conveniently made from a printed circuit board. The lamp PCB is composed of an insulating material 38, and has a conductive surface 34 on a portion of one side. The lamp PCB also contains a large hole 40 in the center through which the bulb support may pass. Also present is a lead hole 36 which allows a lead to pass from the back of the lamp PCB through the hole and make electrical contact with the conductive surface. The lamp PCB allows the power source to make electrical contact with the contact washer and thereby the bottom of the lamp, but because it is primarily insulating, it isolates the power source from the housing and the lamp block, preventing a short circuit.

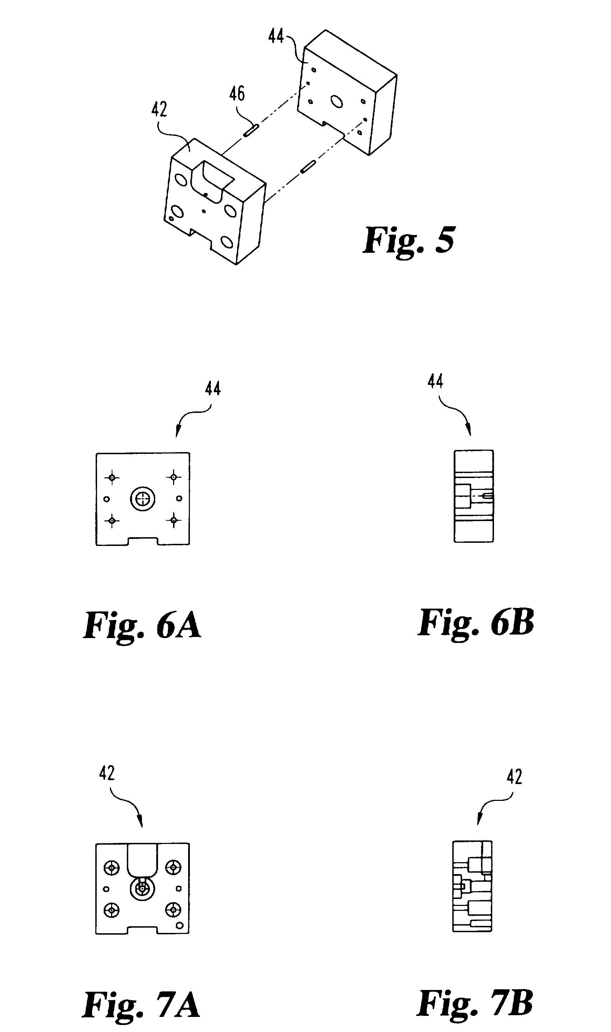

Figure 5 illustrates the two parts of the lamp block and referenced dowel pins 46. Figure 6 shows a back and side view of part one of the lamp block, and Figure 7 illustrates a back and side view of part two of the lamp block. The lamp block is not required to be formed in two parts, however, a two part lamp block is more easily manufactured. The lamp block may be made from any conductive material which allows heat to be removed from the lamp, such as aluminum.

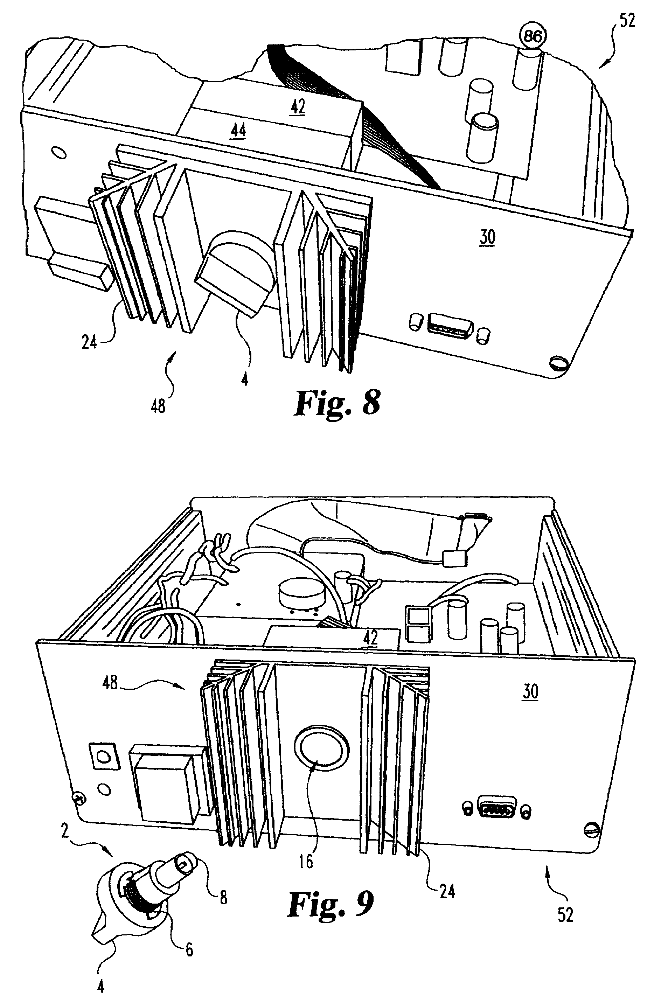

Figure 8 illustrates a portion of a spectrophotometer or main unit assembly 52, with the cover removed. Visible is part one 44 and part two 42 of the lamp block, the heat sink 24 and the knob 4 of the bulb support, all of which together form the lamp block system 48. Also visible is a portion of the housing 30. Figure 9 is a slightly different view of the main unit assembly, with the bulb support 2 separated from the lamp block system. Only part two of the lamp block is visible, although part one is still in place. Together, Figures 8 and 9 illustrate how the bulb support can be easily removed by unsecuring the securing means (here, by unscrewing) from the lamp block system. This allows the bulb support, together with the bulb (and contact washer) to be quickly removed from the lamp block system and therefore the spectrophotometer, without removing the cover from the housing of the spectrophotometer. Once the bulb support is removed, the bulb can simply be pulled out and a new bulb placed into the bulb supporting structure of the bulb support, and then the bulb support inserted through the central hole of the lamp PCB and into the lamp block system. By then securing the bulb support with the securing means (screwing in the bulb support) the bulb is securely in place in the lamp block and is in electrical contact with the power source, and the entire spectrophotometer is ready for use. This entire lamp changing operation can take place in a matter of seconds and requires no tools.

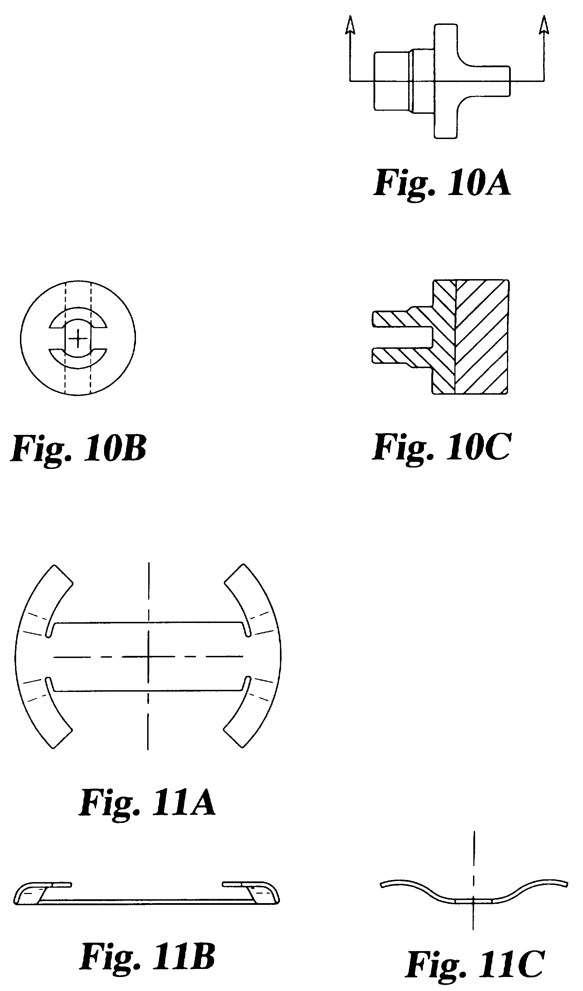

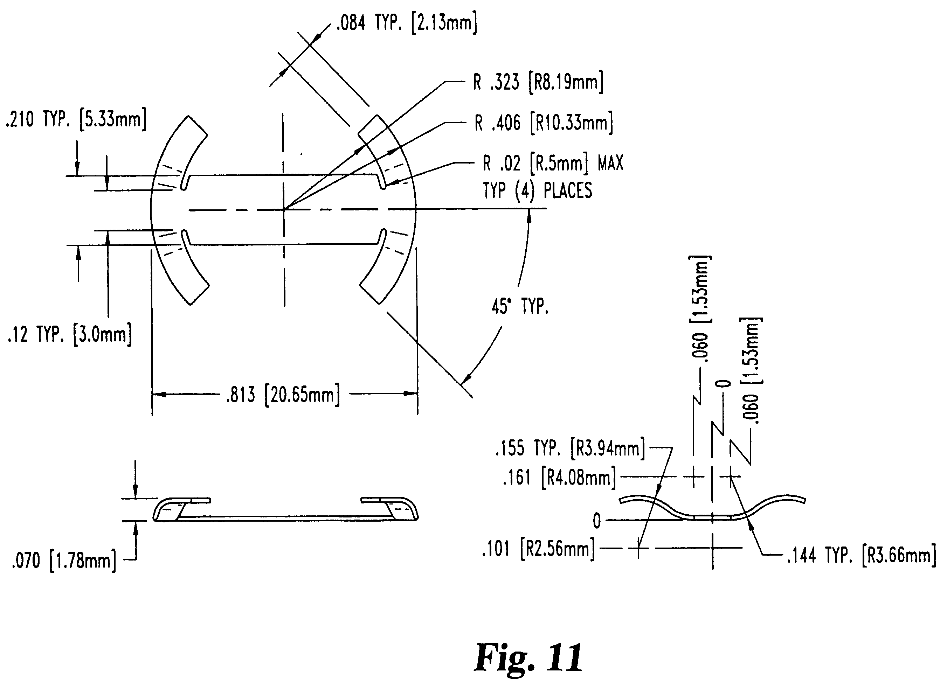

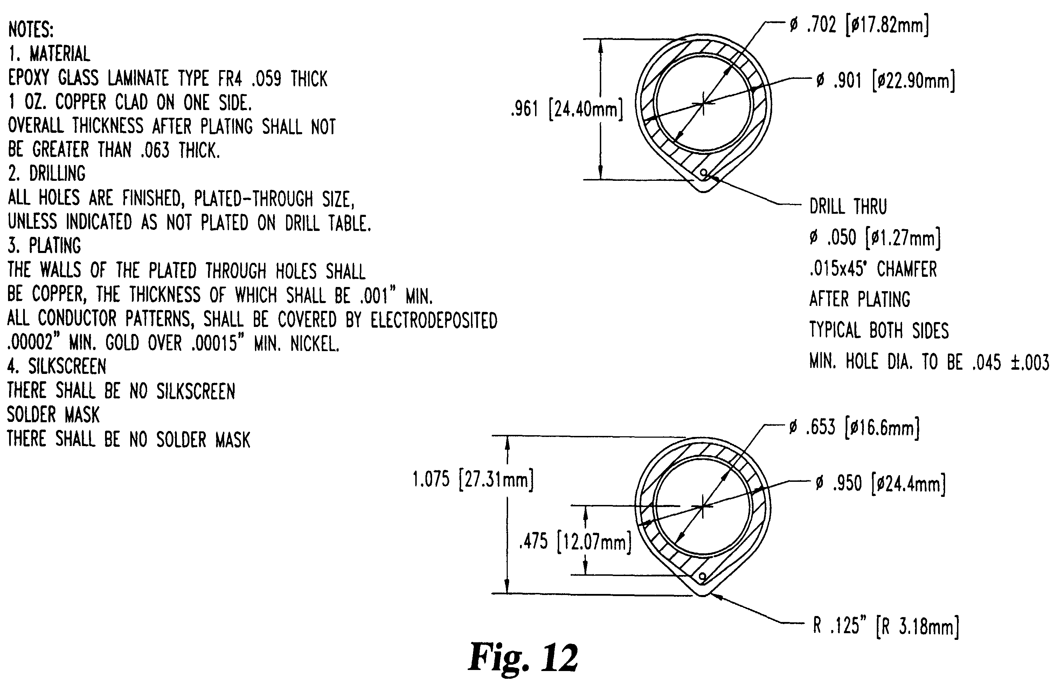

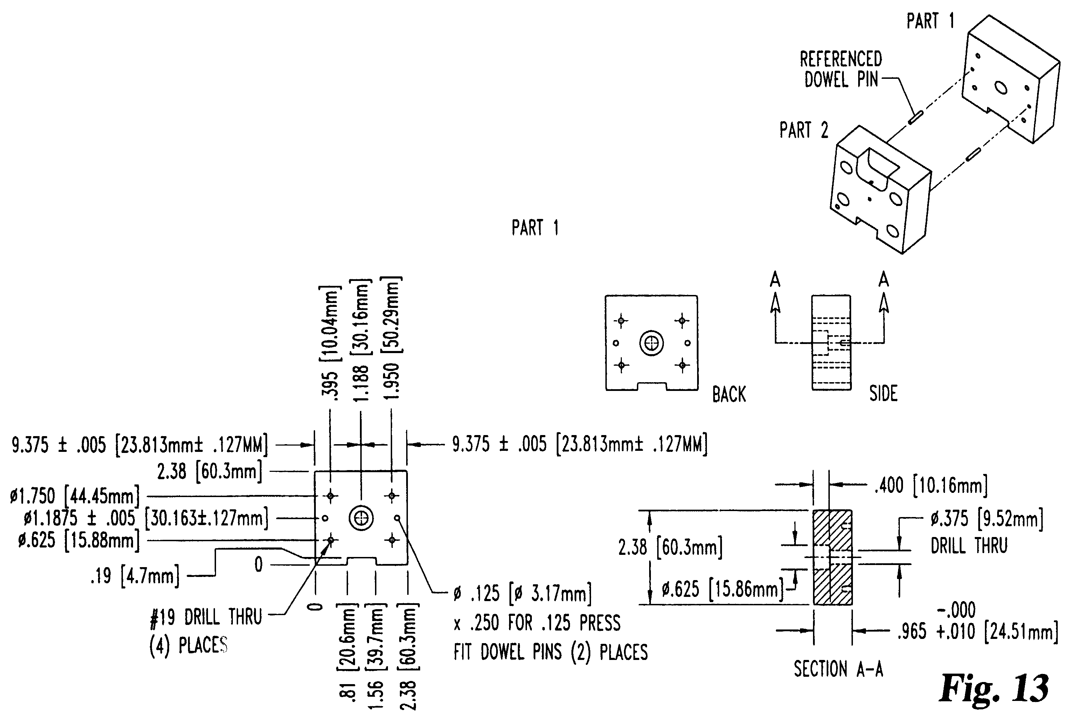

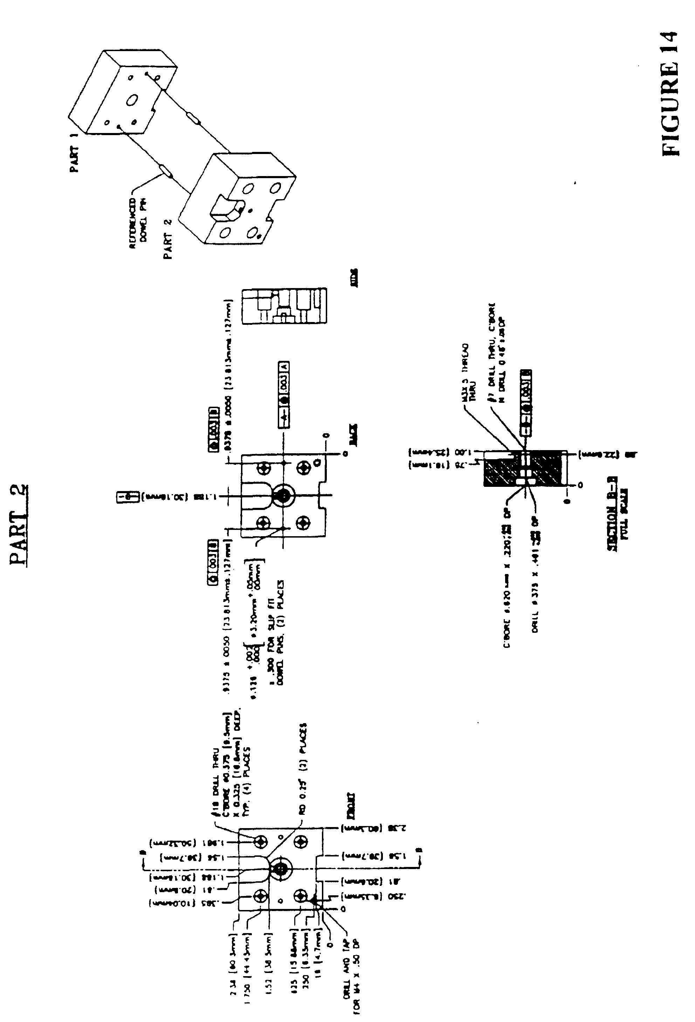

Figures 10-14 provide detailed dimensions and specifications for the lamp block (parts one and two), the lamp PCB, the contact washer, and the bulb support.

The means for securing the bulb support to the lamp block system, as illustrated, includes threadings so that the bulb support may be screwed into the lamp block system. Other securing means may be used, such as a bayonet connector, although this is not preferred. Preferably, the bulb or lamp used with the present invention is of a standard type for use with a spectrophotometer, and is readily available. As illustrated, the lamp has smooth sides so that it may be easily inserted into the bulb supporting structure. The bulb may have threadings, but preferably the metal portion of the bulb is large enough so that it may be grasped with the hand and screwed into the bulb supporting structure without requiring touching the transparent portion of the bulb. The bulb may also have a bayonet connector, however, this is not preferred because it is very difficult to insert a bulb with a bayonet connector into the bulb supporting structure without touching the transparent portion of the bulb.

In the illustrated embodiment the contact washer acts like a spring, and flexes up against the lamp PCB to make positive contact when the bulb support is screwed into the lamp block system. The flange of the lamp provides the other contact against the lamp block. The base of the lamp also makes fixed contact with the center of the contact washer when the bulb support is fully screwed into the lamp block.

Obviously, numerous modifications and variations of the present invention are possible in light of the above teachings. It is therefore to be understood that within the scope of the appended claims, the invention may be practiced otherwise than as specifically described herein.

## Claims

1. A bulb support for mounting in a lamp block system, comprising:
means for securing the bulb support to the lamp block system;
a bulb supporting structure positioned on the bulb support, at one side of the bulb support relative to the securing means; and
a rotation manipulative portion on the bulb support, at a side of the bulb support opposite the bulb support structure relative to the securing means;
wherein when the bulb support is mounted to the lamp block system, via the securing means, the bulb support structure is inside the lamp block system and the manipulative portion is outside the lamp block system.

2. A lamp block system comprising:
a bulb support and a lamp block;
the bulb support comprising:
means for securing the bulb support to the lamp block system;
a bulb supporting structure positioned on the bulb support, at one side of the bulb support relative to the securing means; and
a rotation manipulative portion on the bulb support, at a side of the bulb support opposite the bulb support structure relative to the securing means;
wherein when the bulb support is mounted to the lamp block system, via the securing means, the bulb support structure is inside the lamp block system and the manipulative portion is outside the lamp block system.

3. A spectrophotometer comprising the bulb support of Claim 1.

4. A method of changing a lamp, comprising:
rotating a rotation manipulative portion of a bulb support, thereby disengaging securing means;
removing the bulb support; and
replacing a bulb in the bulb support;
wherein the bulb support comprises:
means for securing the bulb support to the lamp block system;
a bulb supporting structure positioned on the bulb support, at one side of the bulb support relative to the securing means; and
a rotation manipulative portion on the bulb support, at a side of the bulb support opposite the bulb support structure relative to the securing means;
wherein when the bulb support is mounted to the lamp block system, via the securing means, the bulb support structure is inside the lamp block system and the manipulative portion is outside the lamp block system.
